# EUROPÄISCHE PATENTSCHRIFT

(11) **EP 2 675 131 B1**
(45) Veröffentlichungstag und Bekanntmachung des Hinweises auf die Patenterteilung: **13.01.2016**
(21) Anmeldenummer: 13170771.3
(22) Anmeldetag: 06.06.2013
(51) Int. Cl.: H04L 29/06, G06F 9/30, G06F 9/44

(54) **Verfahren zum Austausch von Daten zwischen einem Server und einem Client**
Method for exchanging data between a server and a client
Procédé d'échange de données entre un serveur et un client

(30) Priorität: 12.06.2012 AT 502282012
(43) Veröffentlichungstag der Anmeldung: 18.12.2013
(73) Patentinhaber: Airwin Entertainment GmbH, 1010 Wien (AT)
(72) Erfinder: Lohmann, Peter, 1170 Wien (AT)
(74) Vertreter: Patentanwälte Pinter & Weiss OG

(56) Entgegenhaltungen:
- WO-A2-98/43150
- US-A1- 2009 328 063
- US-B1- 6 526 455

## Beschreibung

Die gegenständliche Erfindung betrifft ein Verfahren zum Austausch von Daten gemäß einem Nachrichtenprotokoll in Form von Nachrichten zwischen einem Server und einem Client.

Für viele Anwendungen, z.B. Spiele, bedarf es einer Kommunikation zwischen einem Server und einem mobilen Endgerät, wie z.B. einem Mobiltelefon, einem Smartphone, etc. Solche Kommunikationsprotokolle tauschen dabei Daten in Form von Nachrichten aus und werden oftmals auch als Middleware bezeichnet. Die Middleware wird dabei auf einem Entwicklungsrechner entwickelt und als generierter Programmcode sowohl auf den Server, als auch auf den (bzw. auf die) Client(s) geladen. Damit können Server und Client Nachrichten, bzw. darin enthaltene Daten, gemäß dem Nachrichtenprotokoll austauschen.

Das Problem dabei sind die extrem heterogenen Plattformen, auf denen die Server- und Clientanwendungen laufen müssen. Z.B. hat eine Java-Server-Implementation vollkommen andere Anforderungen als eine C++-Server-Implementation. Aber auch auf Client-Seite laufen vollkommen unterschiedliche Plattformen, wie z.B. Java Platform, Micro Edition (J2ME) oder .NET Compact Framework. Dazu kommen natürlich noch unterschiedliche Programmiersprachen auf den verschiedenen Plattformen, wie z.B. C#, Objective-C, C++, JavaScript, C, etc.

Ein Nachrichtenprotokoll muss daher für die unterschiedlichsten mobilen Endgeräte (Clients), mit den unterschiedlichsten Plattformen und für unterschiedlichste Leistungsfähigkeiten der Clients generiert werden und muss in der Lage sein, für die jeweilige Anwendung mit ausreichender Geschwindigkeit und Menge Daten auszutauschen. Es sind natürlich eine Reihe von Kommunikationsprotokollen für diesen Zweck bekannt, z.B. textbasierte high-level Protokolle wie XML oder JSON über http, oder binäre Protokolle wie Google Protocol Buffers. Die textbasierten Protokolle haben aber den Nachteil einer hohen Latenzzeit, was diese Protokolle insbesondere für die Verwendung in mobilen Datennetzen ungünstig macht, wohingegen bekannte binäre Protokolle nur geringe Flexibilität aufweisen. Bekannte binäre Protokolle unterstützen nämlich nur ganz bestimmte, wenige Plattformen und Programmiersprachen, weshalb diese nur bedingt einsetzbar sind.

Nachrichten werden dabei softwaremäßig in der Regel als Klassen definiert. Allerdings müssen dadurch auch auf Clientseite für das gesamte Nachrichtenprotokoll sehr viele Klassen geladen werden, was entsprechend viel Speicher benötigt und insbesondere für Clients mit geringer Leistungsfähigkeit (Speicher, Prozessorleistung, etc.) ein Problem darstellt. Serverseitig ist dabei in der Regel mit keinen Problemen zu rechnen. Bisher mussten in diesem Fall z.B. aus Speicherplatzgründen Abstriche in der Qualität bei Grafik und Ton gemacht werden, was natürlich für viele Anwendungen unerwünscht ist.

Das grundlegende Ziel der gegenständlichen Erfindung ist es daher, ein flexibles Nachrichtenprotokoll (Middleware) für ein Umfeld von extrem heterogenen Plattformen anzugeben, wobei das Protokoll ohne Abstriche auch auf Endgeräten mit geringer Leistung bzw. Speicher verwendbar sein soll. Dabei soll das Hinzufügen von weiteren Plattformen, auch mit nur minimalen Anforderungen an deren technische Fähigkeiten, möglich sein. Auch soll eine jederzeitige einfache Anpassung der plattformspezifischen Implementationen der Middleware an die Bedürfnisse der Entwickler ermöglicht werden. Ebenso soll nachträgliche Optimierung möglich sein, um die Größe der versendeten Datenpakete möglichst gering zu halten.

Diese Aufgabe wird erfindungsgemäß dadurch gelöst, dass die Nachrichten in einer Schnittstellen-Definitions-Beschreibung abstrakt beschrieben werden und ein Code-Generator daraus den für den Server und einen Client benötigten Programmcode zur Implementierung des Nachrichtenprotokolls erzeugt, wobei in der Schnittstellen-Definitions-Beschreibung einer Nachricht ein Flag angibt, ob die Nachricht am Client als Klasse oder als Methode implementiert wird. Damit ist es bei der Codeerzeugung über das Flag einfach möglich, zu steuern, ob die Nachrichten clientseitig als Klassen definiert werden, oder ressourcensparend als Methoden. Damit können auch Clients mit geringen Ressourcen das Nachrichtenprotokoll ohne Abstriche ausschöpfen.

Die gegenständliche Erfindung wird nachfolgend näher erläutert.

Ein Nachrichtentyp wird auf einem Entwicklungsrechner beispielhaft wie folgt abstrakt in einer Schnittstellen-Definitions-Beschreibung (DSL) definiert:

```
 "Category: Communication"
 "Request a connection id, or reconnect with existing connection id"
 struct EstablishConnectionClientEvent extends ClientEvent {
    "This is normally null. In case of a reconnect it contains the connection ID sent from the
    server in the process of the initial connection."
    connectionld: string8;
    }
```

Diese Nachricht wird folglich als Objekt mit den Daten "connectionld" in Form eines Strings dargestellt. Diese abstrakte Nachrichtendefinition wird durch einen an sich bekannten Code-Generator in benötigten Code (gemäß vorgegebener Programmiersprache und Plattform) sowohl für den Server, als auch für den Client umgesetzt und dann auf den Server und den Client geladen. Die Nachricht könnte z.B. am Server oder Client in Java als "immutable class" implementiert werden:

```
 /**
 * Category: Communication
 *
 * Request a connection id, or reconnect with existing connection id
 */
 public final class EstablishConnectionClientEvent extends ClientEvent implements
 GMPSerializable {
        private final String connectionld; // string8
       /**
        * GMP type string8
        *
        * This is normally null. In case of a reconnect it contains the connection ID sent from
        the server in the process of the initial connection.
        */
        public String getConnectionld() {
               return connectionld;
       }
}
```

Dabei kann die abstrakte Nachrichtendefinition natürlich durch den Code-Generator in den verschiedensten Sprachen und für die verschiedensten Plattformen umgesetzt werden, wobei die Nachrichten als Klassen definiert werden. Der Server und ein Client sind dann in der Lage, Nachrichten gemäß dem Nachrichtenprotokoll auszutauschen. Allerdings müssen dadurch für das Nachrichtenprotokoll auch auf Clientseite sehr viele Klassen geladen werden, was entsprechend viel Speicher benötigt und insbesondere für Clients mit geringer Leistungsfähigkeit (Speicher, Prozessorleistung, etc.) ein Problem darstellt. Änderungen am Nachrichtenprotokoll können dafür aber zentral und einfach durch Änderung der DSL am Entwicklungsrechner und Laden der Änderungen auf den Server bzw. Client vorgenommen werden.

In der abstrakten Nachrichtendefinition, also in der DSL, wird nun ein neues Flag eingeführt, das den Code-Generator dazu veranlasst, für den Programmcode für ausgewählte Clients keine Klassen zu erzeugen. Vielmehr wird anstelle jeder Klasse mit diesem Flag am Client eine Methode erzeugt, die aus der empfangenen Nachricht die Daten entnimmt - es wird somit direkt der Nachrichteninhalt übergeben. Die Methoden benötigen auf dem Client aber erheblich weniger Speicherplatz, womit das zugrunde liegende Problem gelöst ist, ohne Flexibilität einzubüßen. Die folgende Nachricht enthält z.B. das neue Flag "flat":

```
 flat abstract struct ExampleMessage {
       data
       }
```

Sendet der Server nun eine Nachricht ExampleMessage an den Client, so wird am Client eine Methode ExampleMessage aufgerufen, welche die Daten "data" aus der Nachricht übernimmt.

In der Schnittstellen-Definitions-Beschreibung kann auch Dokumentationstext enthalten sein, aus dem durch den Code-Generator automatisch Code-Dokumentation, sowohl im Programmcode als auch z.B. HTML-Dokumentation, erstellt werden kann. So könnte etwa aus der obigen Beispielnachricht die folgende HTML-Dokumentation erstellt werden:

### struct EstablishConnectionClientEvent

### extends ClientEvent

### Description

Category: Communication
Request a connection id, or reconnect with existing connection id

### Fields

| | | |
|---|---|---|
| serialQueueld | int8 | *Inherited from Message* |
| | | Elements in a queue will be processed in a serial way. |
| | | 0 for do not enqueue - queue 1 is the default queue. |
| | | [TODO move to ServerEvent] |
| connectionld | string8 | This is normally null. In case of a reconnect it contains the connection ID sent from the server in the process of the initial connection. |

## Patentansprüche

1. Verfahren zum Austausch von Daten gemäß einem Nachrichtenprotokoll in Form von Nachrichten zwischen einem Server und einem Client, wobei die Nachrichten in einer Schnittstellen-Definitions-Beschreibung abstrakt beschrieben sind und ein Code-Generator daraus den für den Server und einen Client benötigten Programmcode zur Implementierung des Nachrichtenprotokolls erzeugt, wobei in der Schnittstellen-Definitions-Beschreibung einer Nachricht ein Flag angibt, ob die Nachricht am Client als Klasse oder als Methode implementiert wird.

2. Verfahren nach Anspruch 1, **dadurch gekennzeichnet, dass** bei der Codegenerierung aus Dokumentationstext in der Schnittstellen-Definitions-Beschreibung Code-Dokumentation erzeugt wird.

## Claims

1. A method for the exchange of data according to a message protocol in the form of messages between a server and a client, wherein the messages are abstractly described in an interface definition description and a code generator generates a program code necessary for the implementation of the message protocol therefrom for the server and a client, wherein, in the interface definition description of a message, a flag indicates whether the message is implemented at the client as a class or as a method.

2. The method according to Claim 1, **characterized in that,** during code generation, code documentation is generated from documentation text in the interface definition description.

## Revendications

1. Procédé d'échange de données selon un protocole de messages sous la forme de messages entre un serveur et un client, les messages étant décrits de façon abstraite dans une description de définition d'interface et un générateur de code générant à partir de là le code de programme nécessaire au serveur et à un client pour implémenter le protocole de message, un drapeau indiquant dans la description de définition d'interface si le message est implémenté en tant que classe ou en tant que méthode au niveau du client.

2. Procédé selon la revendication 1, **caractérisé en ce qu'**une documentation de code est générée lors de la génération de code à partir du texte de la documentation dans la description de définition d'interface.
